# EUROPEAN PATENT SPECIFICATION

(11) **EP 2 253 439 B1**
(45) Date of publication and mention of the grant of the patent: **05.04.2017**
(21) Application number: 10159359.8
(22) Date of filing: 08.04.2010
(51) Int. Cl.: B27B 5/22, B27G 19/04

(54) **Mitre Saw**
Gehrungssäge
Scie à onglets

(30) Priority: 18.05.2009 GB 0908484
(43) Date of publication of application: 24.11.2010
(73) Proprietor: Black & Decker Inc., Newark, Delaware 19711 (US)
(72) Inventor: Bell, Ian, Ascot, Berkshire SL5 0AB (GB)
(74) Representative: SBD IPAdmin

(56) References cited:
- EP-A1- 1 772 221
- EP-A2- 1 813 400
- EP-A2- 1 882 567
- WO-A1-98/18588
- WO-A1-2009/115883
- DE-U1- 29 707 664
- US-A- 5 950 514

## Description

The present invention relates to saws, and in particular, to powered saws which can perform chops cuts.

Such a chop saw is known from EP1813400, which discloses the features of the preamble of claim 1.

WO98/18588 discloses a sliding compound mitre saw. Such a saw can perform bevel cuts, mitre cuts, sliding cuts and chop cuts. The sliding compound mitre saw disclosed comprises a base 12 (using the same reference numbers as those used in WO98/18588) having a rotatable table 14 mounted within it. The rotatable table 14, in conjunction with a fence 26 fixed to the base 12, enables the sliding compound mitre saw to perform mitre cuts. Connected to the rear of the table 14 is a bevel mount 16 which is able to pivot about a horizontal axis in relation to the table 14. The pivotal movement of the bevel mount 16 in relation to the table 14 enables the sliding compound mitre saw to perform bevel cuts. Slideably mounted onto the bevel mount 16 are two guide rods 34 which are capable of sliding horizontally, back wards and forwards. The rods 34 enable the sliding compound mitre saw to perform sliding cuts. Pivotally mounted on the end of the guide rods 34 is a motor unit 36, which comprises a motor 22 for rotationally driving a circular saw blade 18 mounted on a drive spindle on the motor unit 36. The pivotal movement of the motor unit 36 in relation to the guide rods 34 enable the saw to perform chop cuts.

Rigidly mounted to the motor unit 36 is a fixed guard 40 which surrounds the cutting edge of the top half of the cutting blade 18. Pivotally mounted to the motor unit is a pivotal guard 42 which can pivot between a first position where it surrounds the cutting edge of the lower half of the cutting blade and a retracted position where the cutting edge of the lower half of the blade 18 is exposed for use in cutting.

The pivotal guard is pivoted between its two positions using a mechanical linkage which comprises a series of mechanical arms 48, 50, which are pivotally connected to each other and the saw, and cams 52, 54 which control the movement of the arms 48, 50. As the motor unit is pivoted downwards, the mechanical linkage causes the lower cutting edge of the blade to become exposed due to the retraction of the pivotal guard by the mechanical linkage.

EP1813400 discloses a sliding compound mitre saw which has a table top. The saw disclosed in EP1813400 has a rear pivotal guard 232 (using the reference numbers of EP1813400) which, in one embodiment, is pivoted by contact with the work piece and in another embodiment, is automatically moved by a guard actuating mechanism comprising a cam 300 and a cam follower 302. However, in both embodiments, the position of the pivot point 234 of the rear guard remains fixed relative to the motor unit 118. Therefore the rear guard restricts the amount of the rear portion of the cutting blade that can be utilised.

The problem associated with the sliding compound mitre saw disclosed in EP1813400 will now be described with reference to Figures 13A and 13B. Figures 13A and 13B show schematic diagrams of the operation of a rear guard on a chop saw of the type disclosed in EP1813400.

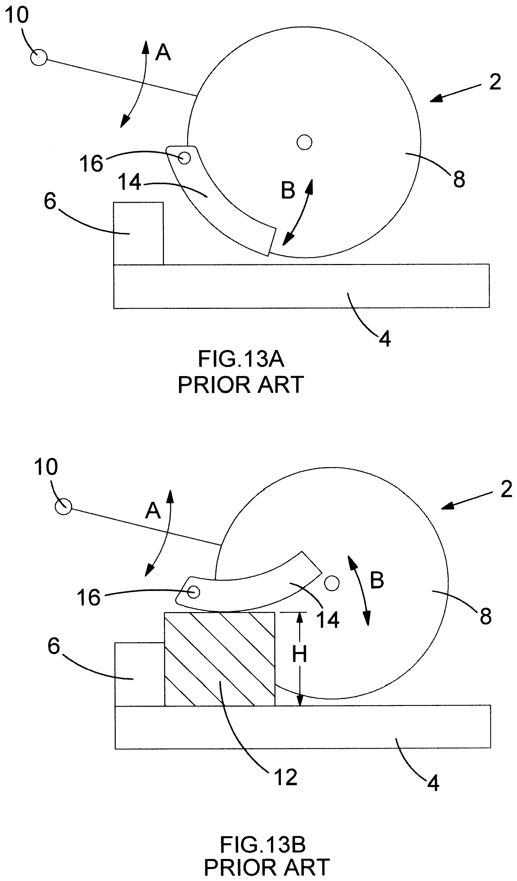

Referring to Figures 13A and 13B, the diagrams show a typical chop saw 2 having a base 4 and a fence 6 attached to the base 4 in well known manner. A circular saw blade 8 is pivotally mounted about a horizontal axis 10 and can pivot towards or away from the base 4 in the direction of Arrow A to cut a work piece 12 located on the base 4. A rear guard 14 is pivotally attached about a pivot point 16 to the motor unit (not shown) in which is mounted the motor (not shown) which rotatingly drives the blade 8. Figure 13A shows the chop saw 2 with the blade 8 located in close proximity to the base 4 without a work piece 12 located on the base 4. Figure 13B shows the chop saw 2 with the blade 8 located in close proximity to the base 4 with a work piece 12 located on the base 4. The rear guard 14 can pivot in the direction of Arrow B between the positions shown in Figure 13A and Figure 13B.

When there is no work piece located on the base 4 and the blade is pivoted towards the base as shown in Figure 13A, the rear guard 14 is in the position shown in Figure 13A under the influence of gravity (or alternatively a spring). In this position it surrounds the cutting edge of the blade 8, thus providing protection. When a work piece 4, such as a piece of wood, is located on the base 4, it is held against the fence 6. When the blade is pivoted towards the base as shown in Figure 13B, the rear guard 14 engages with the work piece 12 and pivots upwardly to expose the cutting edge of the blade 8 to allow it to cut the work piece. However, the height H of the work piece 12 which can be cut with such a saw is limited by the position of rear guard 14, particularly its pivot pint 16, as the position of the pivot point 16 can not move relative to the motor unit.

It should be noted that in EP1813400, in the one embodiment where the guard is automatically moved by a guard actuating mechanism comprising a cam 300 and a cam follower 302, the same problem is still applicable.

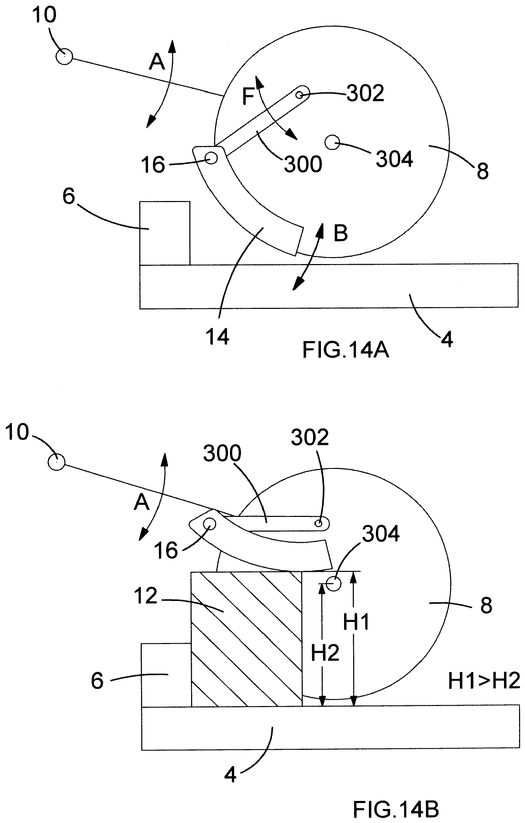

MO2008U000007 is an unpublished Italian patent application (now published as WO2009/115883) which discloses a chop saw having a rear pivotal guard 14 (using the reference numbers of MO2008U000007). The rear pivotal guard 14 is pivotally mounted on a lever 17 which in turn is pivotally mounted on the motor housing. The pivot 16 of the rear pivotal guard 14 is capable of being moved by the pivotal movement of the lever 17. This overcomes the problems associated with the type of guard disclosed in EP1813400. The way in which it does this will now be described with reference to the schematic diagrams in Figures 14A and 14B.

Referring to Figures 14A and 14B, the diagrams show a typical chop saw having a base 4 and a fence 6 attached to the base 4 in well known manner. A circular saw blade 8 is pivotally mounted about a horizontal axis 10 and can pivot towards or away from the base 4 in the direction of Arrow A to cut a work piece 12 located on the base 4. A rear guard 14 is pivotally attached about a pivot point 16 to a lever 300 which in turn is pivotally attached at its other end about a pivot point 302 to the motor unit (not shown) in which is mounted the motor (not shown) which rotatingly drives the blade 8. Figure 14A shows the chop saw 2 with the blade 8 located in close proximity to the base 4 without a work piece 12 located on the base 4. Figure 14B shows the chop saw 2 with the blade 8 located in close proximity to the base 4 with a work piece 12 located on the base 4. The rear guard 14 can pivot in the direction of Arrow B and the lever 300 can pivot in the direction of Arrow F, the rear guard 14 and the lever 300 being able to pivot between the positions shown in Figure 14A and Figure 14B.

When there is no work piece located on the base 4 and the blade is pivoted towards the base as shown in Figure 14A, the rear guard 14 and lever 300 are in the position shown in Figure 14A under the influence of gravity (or alternatively at least one spring). In this position it surrounds the cutting edge of the blade 8, thus providing protection. When a work piece 12, such as a piece of wood, is located on the base 4, it is held against the fence 6. When the blade is pivoted towards the base as shown in Figure 14B, the rear guard 14 engages with the work piece 12 and pivots upwardly to expose the cutting edge of the blade 8 to allow it to cut the work piece. When the rear guard 14 has pivoted by a sufficient amount, it engages with the lever 300 which in turn pivots about its pivot point 302 on the motor unit. The height H1 of the work piece which can be cut with such a saw is not limited by the position of rear guard, particularly its pivot pint 16, as the position of the pivot point 16 can move relative to the motor unit. Furthermore, the height H1 of the work piece can be higher than the height H2 of the spindle 304 on which the saw blade 8 is mounted, allowing the more or all of the rear side of the blade 8 closest to the fence 6 to be used.

However, MO2008U000007 does not disclose a rear guard having an actuating mechanism, such as a cam and a cam follower as disclosed in EP1813400. The advantage of an actuating mechanism is that it moves the rear guard prior to it making contact with a work piece, thus enabling the operator to see the blade engaging with and cutting the work piece.

EP1772221 shows alternative types of guard actuating mechanisms used on a front guard and which comprises 1) a Bowden cable and 2) a cam mechanism used in conjunction with a Bowden cable.

Accordingly there is provided a chop saw comprising:
a base assembly;
a motor unit pivotally mounted on the base assembly to allow the motor unit to pivot towards or away from the base assembly to perform chop cuts, the motor unit having an output drive spindle upon which a circular saw blade can be rigidly mounted to be rotationally driven by the motor unit, the axis of pivot of the motor unit on the base being substantially parallel to the axis of rotation of the output drive spindle;
at least one rearward pivotal guard pivotally mounted at a pivot point on the motor unit which can pivot from a first enclosed position, where it surrounds at least a portion of the lower cutting edge of a saw blade when mounted on the spindle, to a second retracted position where the portion of the lower cuttingedge of the saw blade is exposed;
a pivotal guard actuating mechanism which moves the at least one rearward pivotal guard from its first enclosed position to its second retracted position when the motor unit is pivoted towards the base assembly;
characterised in that the pivot point of the rearward guard is capable of being moved relative to the motor unit, the pivotal guard actuating mechanism moving the at least one rearward pivotal guard from its first enclosed position to its second retracted position by pivoting the rearward pivotal guard about its pivot point and/or moving the pivot point.

A "rearward pivotal guard" is a blade guard which surrounds at least part of the periphery of rear lower quarter of the saw blade in its enclosed position. In the embodiment described herein, the rearward pivotal guard, when it moves from its retracted position, where the cutting edge of the cutting blade is exposed, to its enclosing position, where it surrounds the cutting edge of the cutting blade, it typically rotates, relative to the motor unit 118, in the same direction to that of the cutting blade when driven by the motor to perform a cutting action. However, the axis of pivot of the rearward pivotal guard is located rearward of the axis of rotation of the saw blade. However, it will be appreciated that such a rearward pivotal guard could pivot around the axis of rotation of the saw blade. In such a construction, the rearward pivot blade could pivot in the opposite direction.

The advantage of the present invention is that movement of the pivot point allows more of the rear of the blade to be utilised in the cutting process thus allowing work pieces of larger dimensions to cut. When the rearward pivotal guard is in its second retracted position, at least part of the upper rear quarter of the blade may be exposed.

One way of enabling the guard actuation mechanism to cause the rearward pivotal guard to pivot about its pivot point is for the guard actuation mechanism to directly engage with the rearward pivotal guard. By direct engagement, the rearward pivotal guard can pivot about its pivot point, the pivot point remaining stationary. One way of enabling the guard actuation mechanism to cause the pivot point and the rearward pivotal guard to both move, is to have the guard actuation mechanism engage directly with the pivot point to move it relative to the motor unit. Movement of the pivot point will result in the rearward pivotal guard moving in its entirety.

The rearward pivotal guard can be biased to its first enclosed position. It can be biased using a biasing mechanism comprising gravity or a spring.

The axis of pivot of rearward pivotal guard can be parallel to axis of pivot of the motor unit on the base assembly.

Preferably, the rearward pivotal guard is capable of being moved from the first enclosed position and/or the second retracted position to a third exposed position where at least part of the upper rear quarter of the blade is exposed.

It will be appreciated that the second retracted position and the third exposed position can be distant or in close proximity to each other. When part of the upper rear quarter of the blade is exposed, it can be utilised for cutting. When utilised for cutting, part of the upper rear quarter is located inside of the work piece.

When the rearward pivotal guard is in the first enclosed position, the pivot point can be below the axis of rotation of the spindle and when the rearward pivotal blade guard is in the third exposed position, the pivot point can be above the axis of rotation of the drive spindle.

In such a construction, when the rearward pivotal guard is in the second retracted position, its pivot point can be either below of above the axis of rotation of the spindle.

Ideally, the rearward pivotal guard is pivotally mounted at the pivot point to one end of a lever which in turn is pivotally mounted at a pivot point on the motor unit.

The axes of pivot of the rearward pivotal guard on the lever and the lever on the motor unit can be parallel.

The lever can be biased to a predetermined lower pivotal position. Such biasing means may comprise gravity or a spring.

The guard actuation mechanism can engage:
1) the rear pivotal guard only;
2) the lever only; or
3) both the rear pivotal guard and the lever either simultaneously or successively;
to move moves the at least one rearward pivotal guard from its first enclosed position to its second retracted position.

One way of enabling the guard actuation mechanism to cause the pivot point and the rearward pivotal guard to both move, is to have the guard actuation mechanism engage directly with the lever to pivot it about its pivot point on the motor unit. Pivotal movement of the lever about its pivot point on the motor unit would result in the movement of the pivot point of rearward guard. Movement of the pivot point by pivotal movement of the lever, will result in the rearward pivotal guard moving in its entirety.

If the guard actuation mechanism engages both the rear pivotal guard and the lever, it may do so at the same time. However the guard actuation mechanism may engage the rear pivotal guard first and then the lever or the lever then rear guard.

Preferably, the position where the pivot point of the lever connects to the motor unit is higher that than the axis of rotation the drive spindle when the motor unit is pivoted to its closest position to the base assembly.

By making the position of the pivot point where the lever connects to the motor unit higher that than the axis of the spindle (ie the pivot point is located further away from the base assembly than the axis of the spindle when the motor unit is located in its closest position to the base assembly), it enables at least part of the rear upper quarter of the blade behind the spindle to be utilised, allowing the saw to cut work pieces having a greater thickness than the distance between the axis of the spindle and the base when the motor unit is located in its closest position to the base assembly. Ideally, the pivot point where the lever connects to the motor unit is higher that than the blade when the motor unit is pivoted to its closest position to the base assembly, potentially allowing the whole of the upper rear quarter of the blade to be used for cutting.

When the rearward pivotal guard is in either its first, second or third positions, the axis of pivot of rear guard can be located between the axis of rotation of the blade and axis of pivot of motor unit on the base assembly and preferably between the periphery of blade and axis of pivot of motor unit on the base assembly, in a horizontal direction.

Ideally, the pivot point is located adjacent the periphery of the blade. Its location is ideally in close proximity to the periphery of the blade. A fence can be provided on the base assembly which is located between the axis of pivot of the motor unit and the rear of the blade, the pivot point of the rear guard being located between the fence and the periphery of the blade in a horizontal direction. Such a construction allows a work piece to be placed on the base assembly against the fence. This allows the use of the rear of blade to be easily utilised.

When the rearward pivotal guard moves away from its first enclosed position due to movement of its pivot point, the pivot point ideally moves away, in a horizontal direction, from periphery of the blade towards axis of pivot of motor unit on the base assembly.

When there is a fence provided on the base assembly which is located between the axis of pivot of the motor unit and the rear of the blade and the rearward pivotal guard moves away from its first enclosed position due to movement of its pivot point, the pivot point moves away from periphery of the blade towards the fence.

The rearward pivotal guard can comprise two side panels connected to each other via a central portion, the panels forming a channel in which the blade locates when the rearward pivotal blade guard is in its first enclosed position, the central portion traversing the plane of the blade.

There can be further provided with at least one forward pivotal guard pivotally mounted on the motor unit which can pivot from a first position, where it surrounds at least a portion of the lower edge of a saw blade to a second retracted position where the portion of the lower edge of the saw blade is exposed characterised in that the pivotal guard actuating mechanism moves the at least one forward pivotal guard from its first position to its second retracted position when it moves the at least one rearward pivotal guard from its first position to its second retracted position as the motor unit is pivoted towards the base assembly.

A "forward pivotal guard" is a blade guard which surrounds at least part of the front lower quarter of the saw blade when the guard is in its enclosed position. Typically, a forward blade guard, when it moves from its retracted position, where the cutting edge of the cutting blade is exposed, to its enclosing position, where it surrounds the cutting edge of the cutting blade, it rotates, relative to the motor unit, in the same direction as the cutting blade when driven by the motor to perform a cutting action.

There can be further provided with at least one forward pivotal guard pivotally mounted on the motor unit which can pivot from a first position, where it surrounds at least a portion of the lower edge of a saw blade to a second retracted position where the portion of the lower edge of the saw blade is exposed characterised in that there is provided separate guard actuating mechanisms for front and rear guards.

The movement of pivot point of the rear guard is therefore independent of movement of front guards.

The guards can surround the blade in entirety when the motor unit is position remotely from the base assembly.

The guard actuation mechanism can comprise a mechanical linkage having two parts, the first part connected to the rearward pivotal guard, the second part connected to the base assembly, one part comprising a cam, the other a cam follower, and being arranged so that, as the motor unit is pivoted towards the base assembly, the cam follower rides over the cam to move the at least one rearward pivotal guard from its first position to its second position. Such a rearward pivotal guard can be capable of being moved from the first enclosed position and/or the second retracted position to a third exposed position where at least part of the upper rear quarter of the blade is exposed, the cam disengaging from the cam follower when the rearward pivotal guard moves from the first enclosed position and/or the second retracted position to a third exposed position.

The shape of cam can be made to control rate of movement of the at least one rearward pivotal guard versus pivotal movement of the motor unit.

The guard actuation mechanism can comprise a cable having two ends, the first end connected to the rearward pivotal guard, the second end connected to the base assembly, and being arranged so that, as the motor unit is pivoted towards the base assembly, the cable is pulled to move the at least one rearward pivotal guard. Preferably, the cable is a Bowden cable.

Ideally, the motor unit is slideably mounted on the base assembly to allow the motor unit to slide across the base assembly to enable the saw to perform sliding cuts. In addition or alternatively, it is desirable for the base assembly to comprise a rotatable table mounted within a base, the motor unit being mounted on the rotatable table to enable the saw to perform mitre cuts. A yet further desirable feature, either in addition or as an alternative, is that the motor unit can pivot about a second axis relative to the base ass

Whilst the embodiments described below of the present invention relate to a sliding compound mitre saw with a table top, it will be appreciated that the invention can be utilised any saw which has a chopping function.

Four embodiments of the present invention will now be described with reference to the accompanying drawings of which:
Figure 1 shows a rear perspective view of a sliding compound mitre saw with a table top which includes the first embodiment of the rear guard actuation mechanism;
Figure 2 shows a side view of the sliding compound mitre saw with a table top of Figure 1;
Figure 3 shows a side view of the sliding compound mitre saw with a table top from the opposite side shown in Figure 2;
Figure 4 shows a side view of the sliding compound mitre saw with a table top as shown in Figure 3 with the table, riving knife and fixed guard removed;
Figure 5 shows the bar of the rear guard actuation mechanism;
Figure 6 shows a schematic view of the fourth rearward pivotal guard;
Figures 7A to 7C show a schematic diagram of the operation of the saw without a work piece;
Figures 8A to 8C show a schematic diagram of the operation of the saw cutting a work piece;
Figure 9 shows an alternative design where the lever is pivotally mounted above the blade;
Figure 10 shows a side view of the sliding compound mitre saw with a table top with the table, riving knife and fixed guard removed according to a second embodiment of the present invention;
Figure 11 shows a side view of the sliding compound mitre saw with a table top with the table, riving knife and fixed guard removed according to a third embodiment of the present invention;
Figure 12 shows a side view of the sliding compound mitre saw with a table top with the table, riving knife and fixed guard removed according to a fourth embodiment of the present invention.
Figures 13A and 13B show schematic diagrams of the operation of the type of rear guard disclosed in EP1813400; and
Figures 14A and 14B show schematic diagrams of the operation of the rear guard disclosed in MO2008U000007.

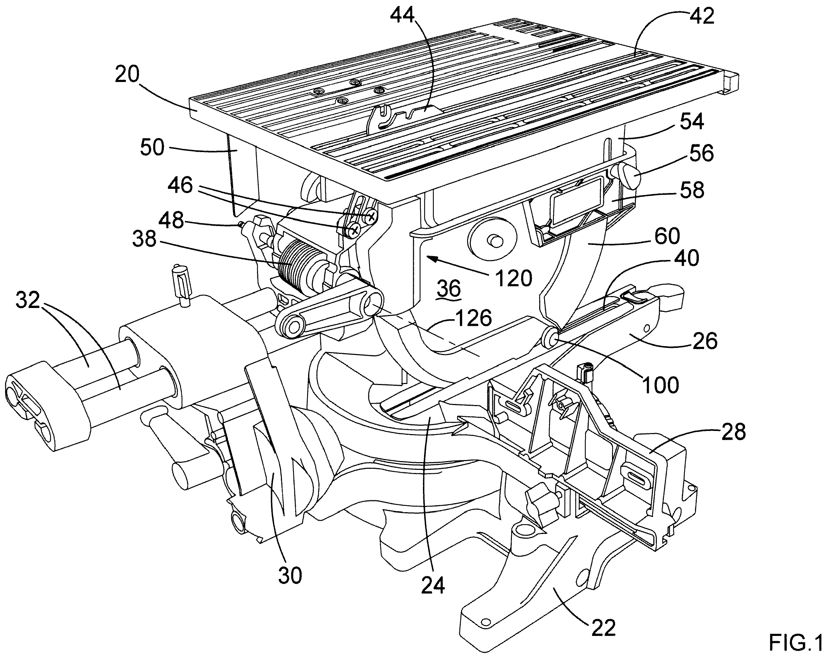

Referring to Figures 1 to 3, there is provided a sliding compound mitre saw with a table 20 which can perform bevel cuts, mitre cuts, sliding cuts and chop cuts. The sliding compound mitre saw disclosed comprises a base 22 having a rotatable table 24 mounted within it. An extension arm 26 is attached to the periphery of the rotatable table 24 and extends forward in well known manner. The rotatable table 24, in conjunction with a fence 28 fixed to the base 22, enables the sliding compound mitre saw to perform mitre cuts. Connected to the rear of the rotable table 24 is a bevel mount 30 which is able to pivot about a horizontal axis in relation to the rotatable table 24. The pivotal movement of the bevel mount 30 in relation to the rotatable table 24 enables the sliding compound mitre saw to perform bevel cuts. Slideably mounted onto the bevel mount 30 are two guide rods 32 which are capable of sliding horizontally, back wards and forwards. The rods 32 enable the sliding compound mitre saw to perform sliding cuts. Pivotally mounted on a motor support 70 attached the ends of the guide rods 32 is a motor unit 34, which comprises a motor (not shown) for rotationally driving a circular saw blade 36 mounted on a drive spindle on the motor unit 34. The pivotal movement of the motor unit 34 about the pivotal axis 126 in relation to the motor support 70 and guide rods 32 enables the saw to perform chop cuts. The motor unit 34 is biased to an upward position by a spring 38. A slot 40 extends across the rotatable table 34 and along the extension arm 36.

Mounted on the top of the saw is the table 20 which enables the sliding compound mitre saw to be also used as a table saw. The table 20 is adjustably attached to the top side of the motor unit 34. A slot 42 is formed through the table 20 through which the top section of the circular saw blade 36 can project. The motor unit 34 can be locked in a downward position (as shown in Figure 1) using a slideable pin 48 such that the table 20 is horizontal. The height of the table 20, and hence the amount of saw blade 36 passing through it, can be adjusted vertically. The table 20 is mounted using two tubular pillars 54 which are rigidly attached to the table 20 and which are slideably attached via clamps 56 to the motor unit 34. A pin guard 50 prevents the release of the slideable pin 48 to allow the motor unit 34 to pivot unless the table is adjusted to its highest position. Such a pin guard is described in more detail in EP1882567. A work piece such as a piece of wood can then be slid across the top of the table 20 to engage with the top section of the saw blade 36 when it projects through the slot thus enabling the sliding compound mitre saw to be used as a saw table. A riving knife 44 is located using two screws 46 on the motor unit 34 towards the rear of the saw blade 36 and a guard (not shown) can be mounted on the table 20 and surround the top of the saw blade 36 when the blade 36 projects through the slot 42 but the saw is not being used as a table saw.

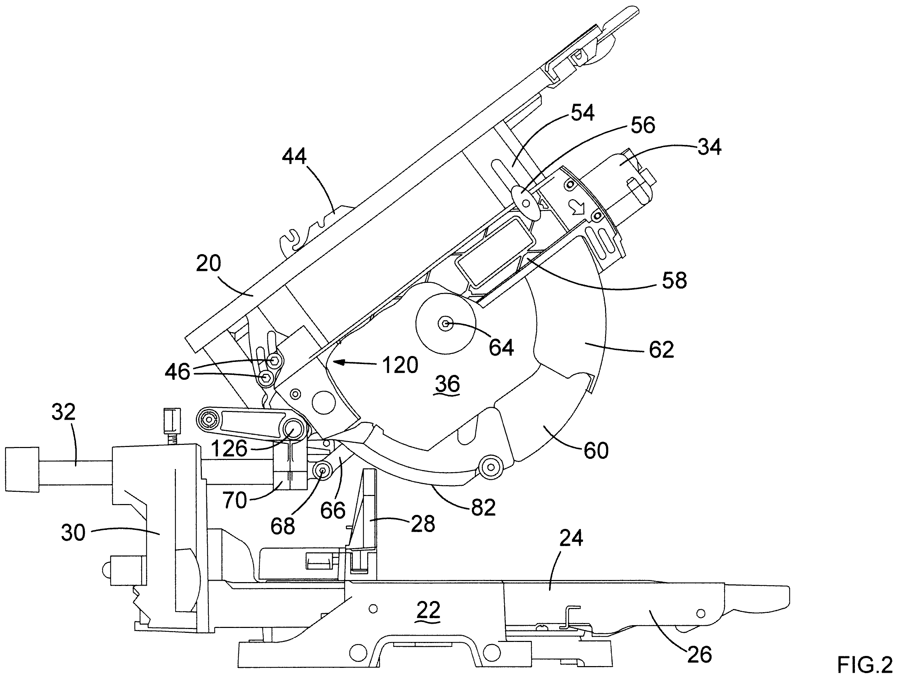

The saw comprises a guard assembly 58, 60, 62, 82 located below the table 20 which is capable of enclosing the lower section of the saw blade 36 for safety purposes when the saw is not being used as a the sliding compound mitre saw for performing chop, mitre, bevel or sliding cuts. The guard assembly encloses the blade 36 when the motor unit is raised as shown in Figure 2 or when the motor unit 34 is locked downwardly as shown in Figure 1.

A handle 52 is attached to the motor unit 34 by which a user can grip and pivot the motor unit 34 and the circular saw blade 36 downwards towards the rotatable table 24. An electric switch (not shown) is mounted on the handle 52 for activating the motor.

The lower part of the circular saw blade 36 below the table is surrounded by the guard assembly. The guard assembly will now be described in more detail.

Attached to the motor unit 34 is a first fixed guard 58 which surrounds the middle sections of the circular saw blade 36. A "fixed guard", such as the first fixed guard 58, is a blade guard which remains stationary relative to the motor unit 34.

A section 120 of the fixed guard 58 has been removed to expose a large part of the upper rear quarter 142 of the blade 36 as seen in Figure 2.

Pivotally attached to the motor unit 34 are second and third pivotal forward pivotal guards 60, 62. The second forward pivotal guard 60 pivots about the axis 64 of the circular saw blade 36. A spring (not shown) biases the second forward pivotal guard 60 downward (clockwise) as shown in figure 2 which in turn biases the third forward pivotal guard 62 downward.

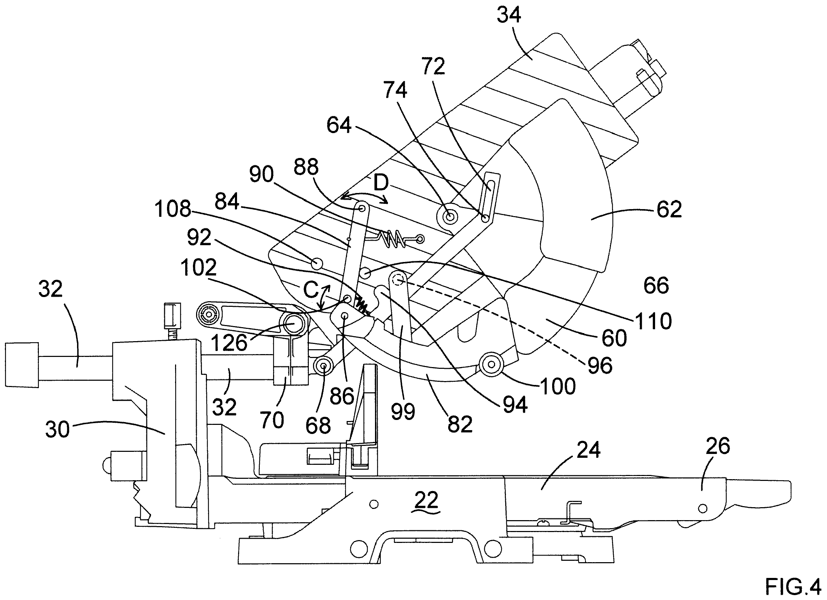

A bar 66 (see Figure 4) is pivotally attached about pivot point 68 at one end to the motor support 70 attached to the end of the guide rails 32. An elongate slot 72 is formed along a section of the length of the bar 66 at the other end. A pin 74, rigidly attached to the second forward pivotal guard 60, passes through the slot 72 and which is capable of sliding along the slot 72. The biasing spring acting on the second forward pivotal guard 60 causes the guard to pivot until the pin 74 is at the inner end position of the slot (shown in Figure 4) where it remains held by the force of the spring. The pin 74 located within the slot 72 of the bar 66 controls the pivotal movement of the second guard 60 on the motor unit 34 as it pivots upwards and downwards. When the motor unit 34 is in its upper most pivotal position (Figure 4), the second forward pivotal guard 60 surrounds part of the lower front quarter of the circular saw blade 36. As the motor unit 34 is pivoted downwardly, the bar 66 pushes the pin 74, causing the second forward pivotal guard 60 to pivot.

The slot 74 allows the guard 60 to pivot freely, against the biasing force of the spring if it encounters a work piece located on the rotable table 24.

The third forward pivotal guard 62 pivotally mounted on the motor unit 34 and can pivot about the axis of rotation 68 of the saw blade 36.

The second forward pivotal guard can telescope in and out of the third forward pivotal guard, both guards 60, 62 being able to telescope into or out of the fixed guard 58. The guards can freely pivot into and out of, in a telescopic manner, the first fixed guard 58. The third forward pivotal guard 62 is prevented from completely pivoting out of the fixed guard 58 by a catch (not shown) formed on the third forward pivotal guard 62.

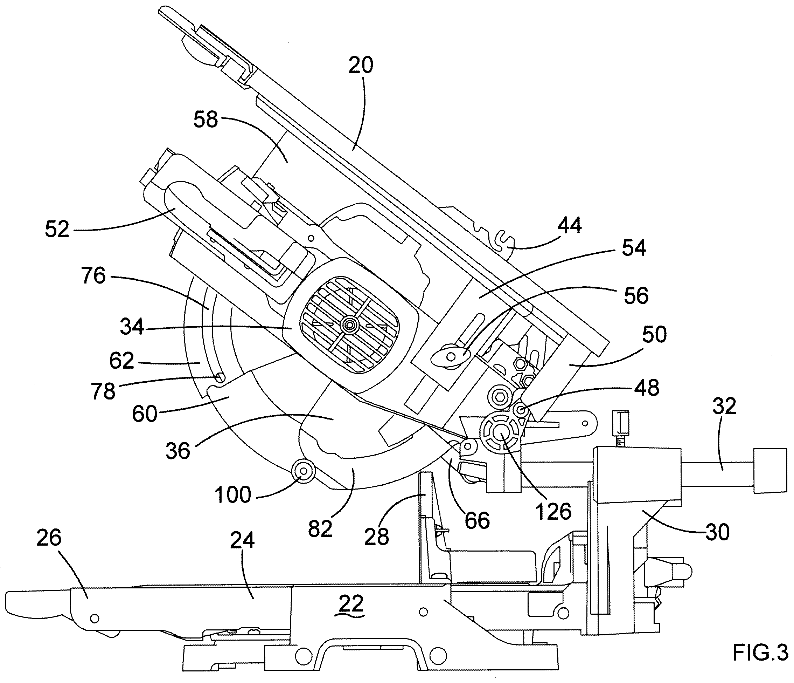

A slot 76 is formed through the side of the third forward pivotal guard 62 (see Figure 3). A screw 78 is attached to the second forward pivotal guard 60, the body of which passes through the slot 76. As the second forward pivotal guard 60 pivots, due to the pivoting movement of the motor unit 34 which causes the second forward pivotal guard 60 to pivot due to the bar 66, the screw 78, which initially is located at the lowest point within the slot 76 as shown in Figure 3, slides along the slot 76 of the third forward pivotal guard 62 until it reaches the top end of the slot 76. At which point, the pivotal movement of the second forward pivotal guard 60, which is now located within the third forward pivotal guard 62 in a telescopic fashion, causes pivotal movement of the third forward pivotal guard 62. The two guards 60, 62 pivotally move in unison inside the fixed guard 58 until the two guards are located inside of the fixed guard 58.

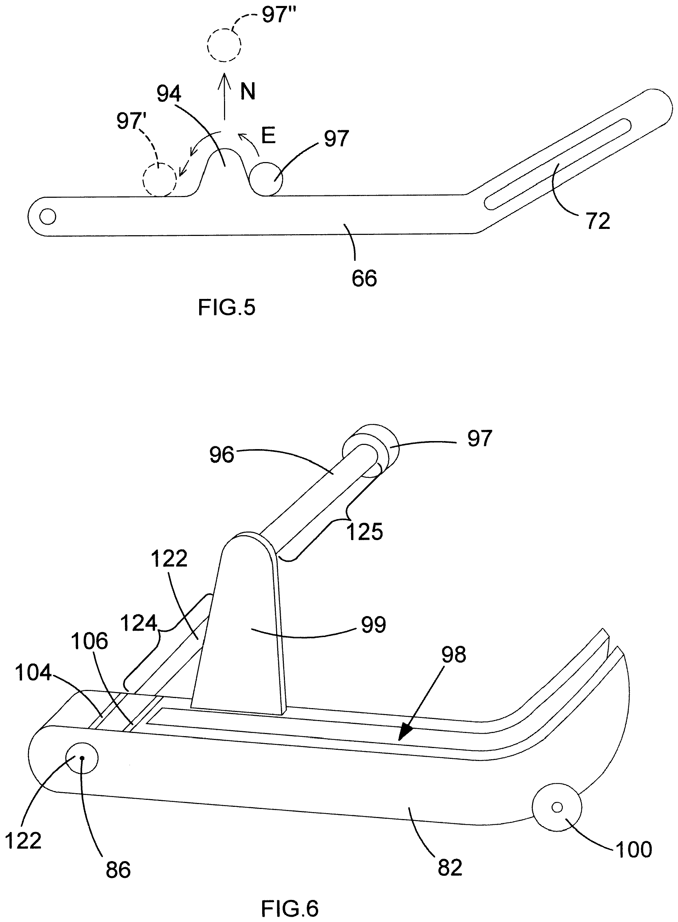

A fourth rearward pivotal guard 82 is pivotally mounted on the motor unit 34 via a lever 84. The fourth rearward pivotal guard 82 is pivotally attached at its rear end via a pivot mechanism to the lever 84 so that the fourth rearward pivotal guard 82 can pivot about the pivot point 86 in the direction of Arrow C. The pivot mechanism comprises a long bolt 122 which provides a large gap 124 between the rearward pivotal guard and the lever 84 (see Figure 4). This provides space for a work piece to pas between the blade 36 and the motor unit 34 as the blade cuts the work piece. The amount of pivotal movement of the fourth rearward pivotal guard is restricted via a first stop 102. The stop limits the pivotal movement of fourth rear guard 82 in both directions. When the fourth rearward pivotal guard pivots clockwise in Figure 4, the region 104 (see Figure 6) engages with the stop 102 and when the fourth rearward pivotal guard pivots anti-clockwise in Figure 4, the region 106 engages with the stop 102.

The other end of the lever 84 is pivotally mounted via a pivot mechanism on the motor unit 34 so that it can about the pivot point 88 in the direction of Arrow D. The pivot point of the lever on the motor unit 34 is higher than the spindle upon which the blade 36 is mounted both when the motor unit is pivoted to its lowest position (Figure 1) and its highest position (Figure 4). The amount of movement of the lever is limited by two stops 108, 110 formed on the motor unit 34. A helical spring 90 attaches between the lever 84 and the motor unit 34 to bias the lever 84 downwardly in Figure 4 (anti clockwise about point 88). The lever 84 is biased by the spring 90 towards and into engagement with the stop 110 closest to the bar 66. When the lever is in this position the pivot point of the fourth rearward pivotal guard is located adjacent the periphery of the blade and is located between the periphery of blade and the axis of pivot of the motor unit 34 on the base assembly in a horizontal direction.

A second helical spring 92 attaches between the lever 84 and the fourth rear guard 82 to bias the guard 82 downwardly in Figure 4 (clockwise about point 86). The first region 104 of the fourth rearward pivotal guard is biased by the second spring 92 towards and into engagement with the stop 104. Whilst springs 90, 92 are utilised in this embodiment, it will be appreciated by the reader that these could be omitted, with gravity being used to move the lever 82 and fourth rear guard into the position shown in Figure 4.

The rear guard 82 is manufactured in a one piece construction. A slot 98 is formed centrally along the length of the fourth rearward pivotal guard 82 in which the blade 36 locates. When the fourth rearward pivotal guard pivots to a maximum rearward (clockwise) position, it surrounds part of the rear lower quarter of the circular saw blade 36 (see Figure 4). When the fourth rearward pivotal guard 82 is pivoted about its axis 86 in an anti-clockwise direction, the edge of the cutting blade 36 passes through the slot 98 in the fourth rearward pivotal guard 82, allowing it to contact a work piece to cut it.

Formed on the bar 66, which is used to pivot the second forward pivotal guard 60, is a cam 94 (see Figure 5). A cam follower 97, in the form of a roller bearing, is mounted on a long rod 96 which is rigidly attached to the fourth rearward pivotal guard 82 via an arm 99 and which engages with the cam 94 (see Figure 6). The length of the rod 96 provides a large gap 125 between the rearward pivotal guard and the motor unit 34. This provides space for a work piece to pass between the blade 36 and the motor unit 34 as the blade cuts the work piece

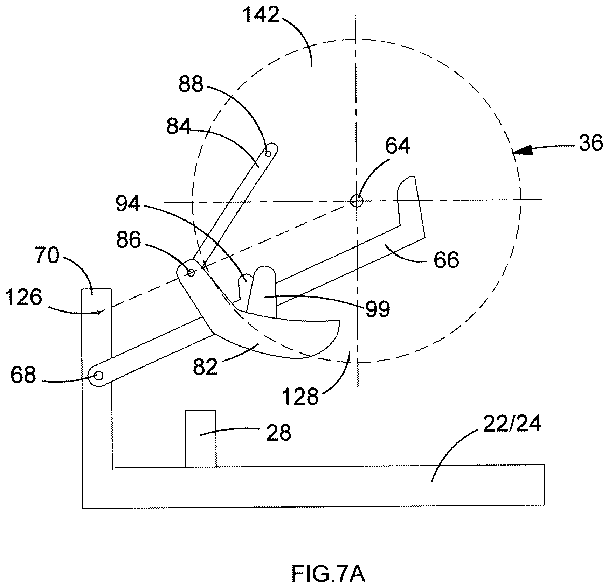

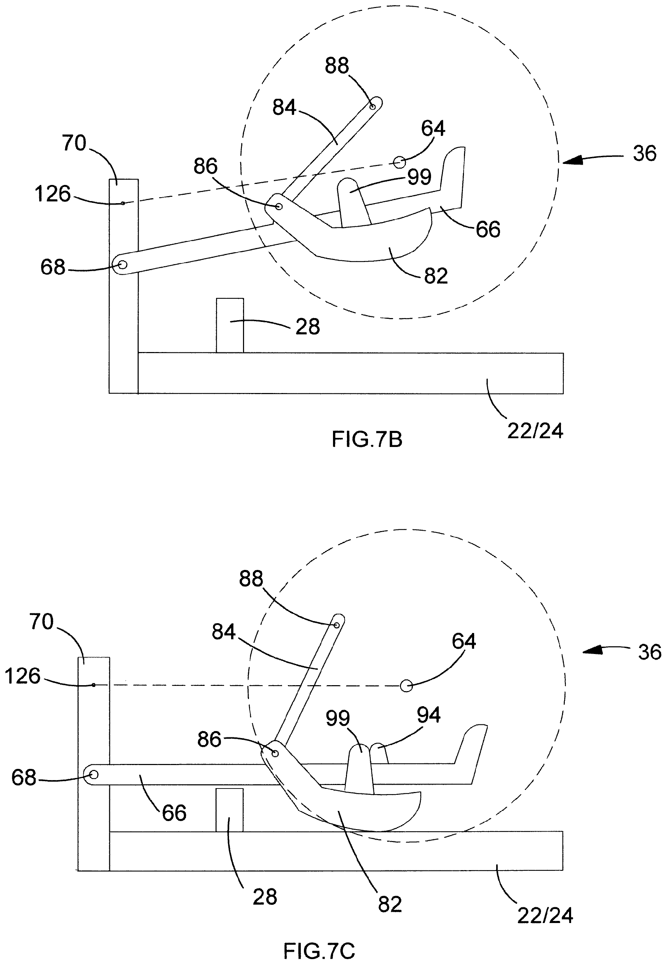

As the motor unit 34 is pivoted downwardly causing the bar 66 to pivot, resulting in a relative movement between the cam 94 and cam follower 97 due to the bar pivoting about the pivot point 68 at one end on the motor support 70 whilst the cam follower 97 pivots with the motor unit 34 about the pivotal axis 126, the cam follower 97 is made to ride over the cam 94 in a direction shown by the arrows E in Figure 5. When the motor unit 34 is in its lowest position, the cam follower 97 is in the position indicated by the dashed lines 97' in Figure 7. The shape of the cam 94 is such to cause the fourth rearward pivotal guard 82 to initially rise to expose the edge of the blade 36 (to aid visibility) (when the cam follower 97 is on top of the cam 94) and then fall to engage with the work piece as blade cuts into the work piece. The cam 94 and cam follower 97 moves the rearward pivotal guard 82 by either pivoting it about its pivot point 86 on the lever or by moving it by the pivotal movement of the lever 84 about its pivot point 88. It will be appreciated by the reader that the shape of the cam can be varied to alter the type of movement of the rearward pivotal guard. The relative amount of movement of the fourth rearward pivotal guard 82 between being pivoted about its pivot point 86 on the lever and being moved by pivotal movement of the lever 84 about pivot point 88 can be adjusted by altering the strengths of the springs 90, 102.

When the motor unit 34 rises, the cam follower 97 retraces its path over the cam 94 on bar 66, allowing the third rearward pivotal guard 82 to return to its original position.

The operation of the cam 94 and cam follower 97 of the rearward pivotal guard 84 will now be described with reference to schematic diagrams in Figures 7A to 7C.

When the motor unit 34 is at its highest position, the fourth rearward pivotal guard 82 surrounds the periphery of the lower rear quarter of the blade 36 as shown in Figure 7A. This can be regarded as a first position. The axis of pivot 86 of the fourth rearward pivotal guard 82 is below the axis of rotation 64 of the blade 36. The cam follower 97 is forward of the cam 94. As the motor unit 34 is pivoted towards the base assembly 22, 24, the cam follower 97 rides over the cam 94 (see Figures 7B and 5). As the cam follower 97 rides over the cam 94, it causes the fourth rearward pivotal guard 82 to move, by either pivoting it about its pivot point 86 on the lever or by moving it by the pivotal movement of the lever 84 about its pivot point 88, exposing the periphery of the cutting blade 36. This can be regarded as the second position. In this position, the axis of pivot 86 of the fourth rearward pivotal guard 82 may still be below the axis of rotation 64 of the blade 36 depending on how much pivotal movement of the lever 84 about its axis of pivot 88 there has been. If the pivotal point 86 of the fourth rearward pivotal guard 82 moves during this action, its moves horizontally away from its position adjacent the periphery of the blade 36 towards the axis of pivot 126 of the motor unit 34 on the base assembly 24, 26. As the motor unit 34 continues to be pivoted until it reaches its closest position to the base assembly 22, 24, the cam follower 97 continues to ride over and past the cam 94 (see Figures 7C and 5). This allows the fourth rearward pivotal guard 82 to surround the periphery of the blade 36 again. When the motor unit 34 is in its closest position to the base assembly, the fourth rearward pivotal guard 82 surrounds at least part of the periphery of the lower rear quarter of the blade 36 as shown in Figure 7C. The fourth rearward pivotal guard is therefore back in its first position. The cam follower 97' is rearward of the cam 94 (see Figure 5).

By releasing the motor unit 34 and allowing it to return to its highest position (Figure 7A), the cam follower 97 travels back over the cam 94, moving the fourth rearward pivotal guard 82 firstly to its second position and then back to its first position.

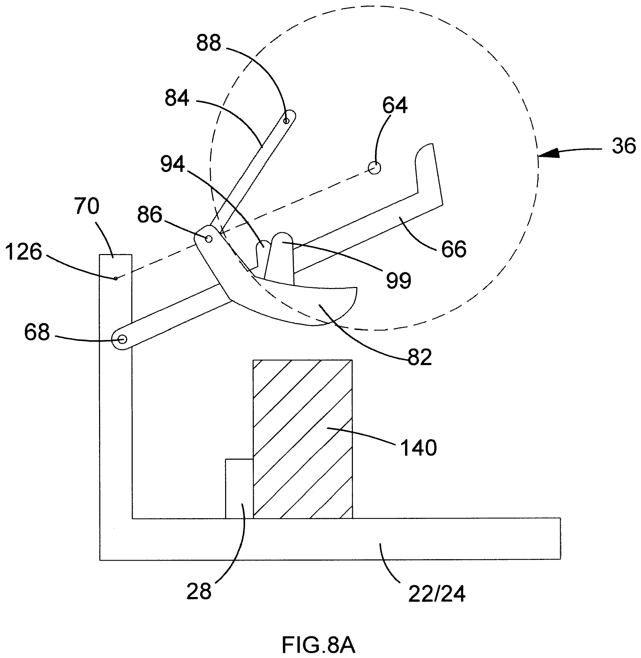

The operation of the fourth rearward pivotal guard 84 as the saw cuts a work piece will now be described with reference to schematic diagrams in Figures 8A to 8C.

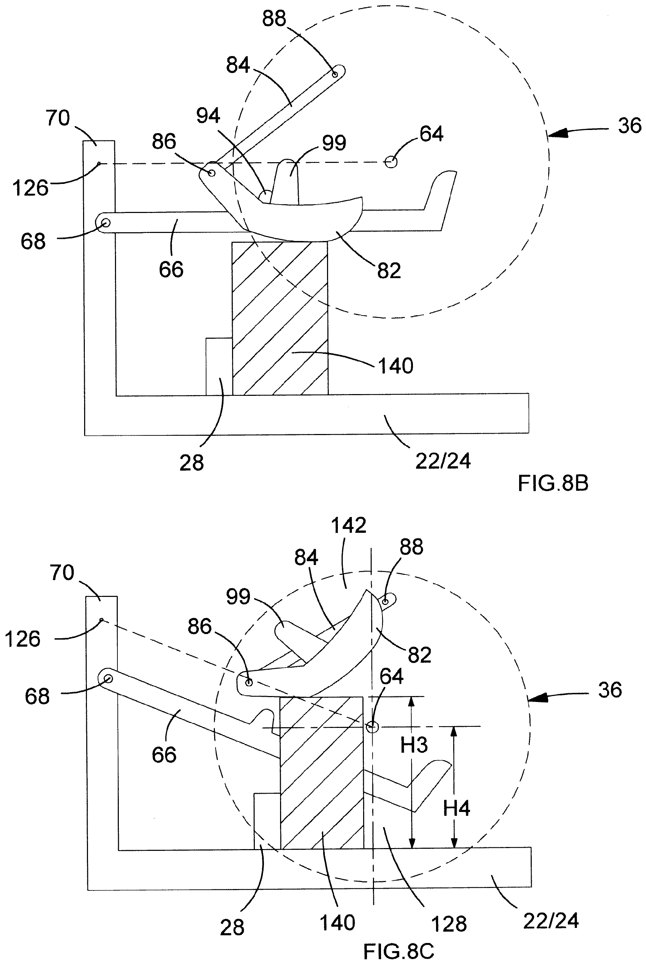

When the motor unit 34 is at its highest position, the fourth rearward pivotal guard 82 surrounds the periphery of the lower rear quarter of the blade 36 as shown in Figure 8A. This is the first position. The axis of pivot 86 of the fourth rearward pivotal guard 82 is below the axis of rotation 64 of the blade 36. A work piece 140 is placed on the base assembly against the fence 28. The cam follower 97 is forward of the cam 94. As the motor unit 34 is pivoted towards the base assembly 22, 24, the cam follower 97 rides over the cam 94 (see Figure 5). As the cam follower 97 rides over the cam 94, it causes the fourth rearward pivotal guard 82 to move, by either pivoting it about its pivot point 86 on the lever or by moving the lever 84 about its pivot point 88, exposing the periphery of the cutting blade 36. This is the second position. The axis of pivot 86 of the fourth rearward pivotal guard 82 may be below the axis of rotation 64 of the blade 36 dependent on the amount of pivotal movement of the lever 84 about its pivotal axis 88. The exposed periphery cuts into the work piece 140 until the fourth rearward pivotal guard 82 engages with the work piece (see Figure 8B). As the motor unit 34 continues to pivot towards the base assembly and the blade 36 cuts through the work piece 140, the fourth rearward pivotal guard 82 is prevented from any further downward movement and therefore rests against the top surface of the work piece 140, moving relative to the pivoting motor unit 34. The relative movement is allowed by fourth rearward pivotal guard 82 pivoting it about its pivot point 86 on the lever or by the pivotal movement of the lever 84 about its pivot point 88. As the fourth rearward pivotal guard 82 moves relative to the motor unit 34, the cam follower 97 becomes disengaged from the cam 94 (Arrow N in Figure 5), the cam follower 97 and cam 94 having no further influence on the movement of the fourth rearward pivotal guard 82. The position of the cam follower 97, when it is disengaged from the cam 94, is indicated by 97" in Figure 5. When the motor unit has pivoted to its lowest position, it has completely cut through the work piece 140 as shown in Figure 8C. This can be regarded as its third position. In this position, the axis of pivot 86 of the fourth rearward pivotal guard 82 is above the axis of rotation 64 of the blade 36. The fourth rearward pivotal guard 82 and the lever 84 have both been pivoted completely out of the way. As can be seen, part of the upper rear quarter 142 of the blade 36 is used in the cutting of the work piece, allowing the height H3 of the work piece to be higher than that of the spindle of the blade 36 when the motor unit 34 is in its lowest position.

Releasing the motor unit 34 and allowing it to return to its highest position (Figure 8A), allows the fourth rearward pivotal guard to move back to its first position.

A roller 100 is mounted on the rearward pivotal guard 82 to ensure a smooth contact is made with the work piece.

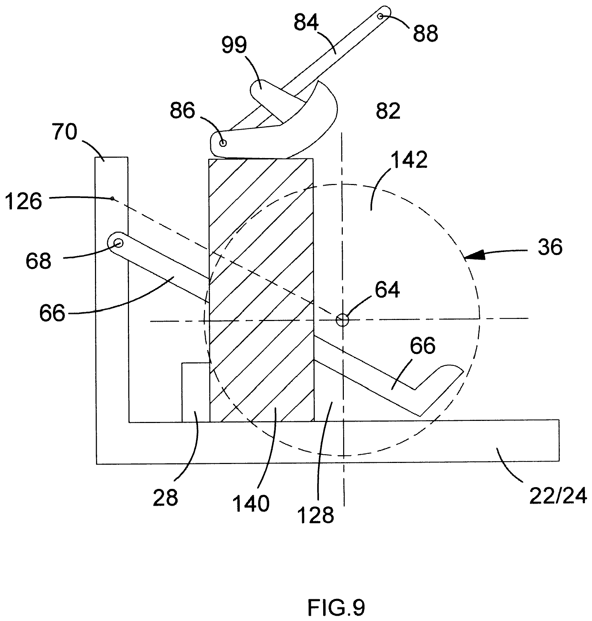

It will be appreciated that the pivot point 88 of the lever 84 can be located above the blade 36 as shown in Figure 9 allowing the whole of the fourth reward pivotal guard 82 to move above the blade 36, enabling the whole of the rear upper quarter of the blade 36 to be used in cutting a work piece 140.

When the motor unit 34 is raised to its upper pivot point (Figure 4) or is located at its lowest pivot point (Figure 1), the front tip of the fourth rearward pivotal guard 82 and the lower end of the second forward pivotal guard 60 meet so that the whole of the lower section of the cutting blade 36 is surrounded. This, in combination with the fixed guard 58, ensures the whole of the blade 36 is surrounded when the motor unit 34 is in the upper or lower positions.

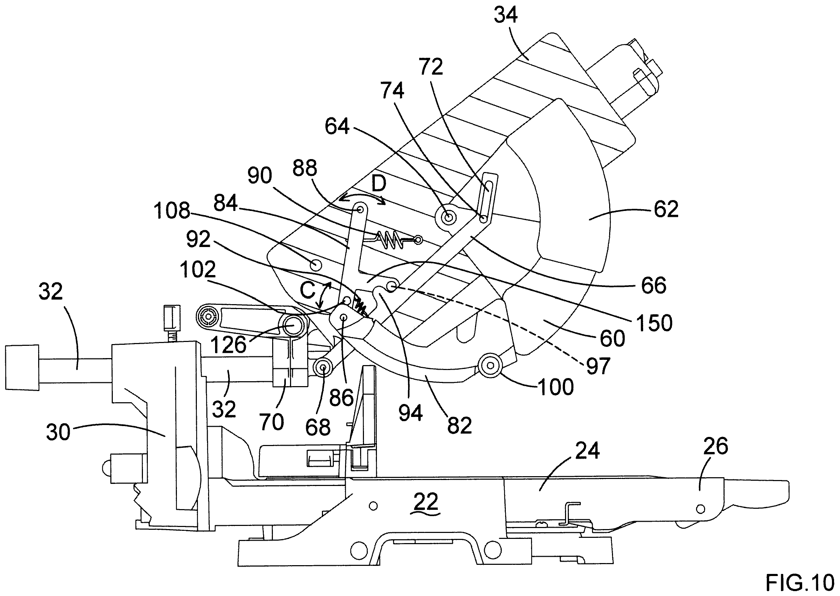

A second embodiment of the present invention will now be described with reference to Figure 10. Where the same features disclosed in the second embodiment were present in the first embodiment, the same reference figures have been used.

The design of the second embodiment is substantially the same as the first embodiment. However, in the second embodiment, the cam follower 97 on the fourth rearward guard 82 has been moved. The cam follower 97 is mounted on an extension arm 150 which is rigidly attached to the lever 84. The action of the cam 94 and cam follower 97 is the same as in the first embodiment. However, in the second embodiment, the resultant movement of the cam follower 97 over the cam 94 causes the lever 84 to pivot. This in turn moves the rearward pivotal guard in its entirety, as the pivot point 86 of the rearward pivotal guard 82 is moved.

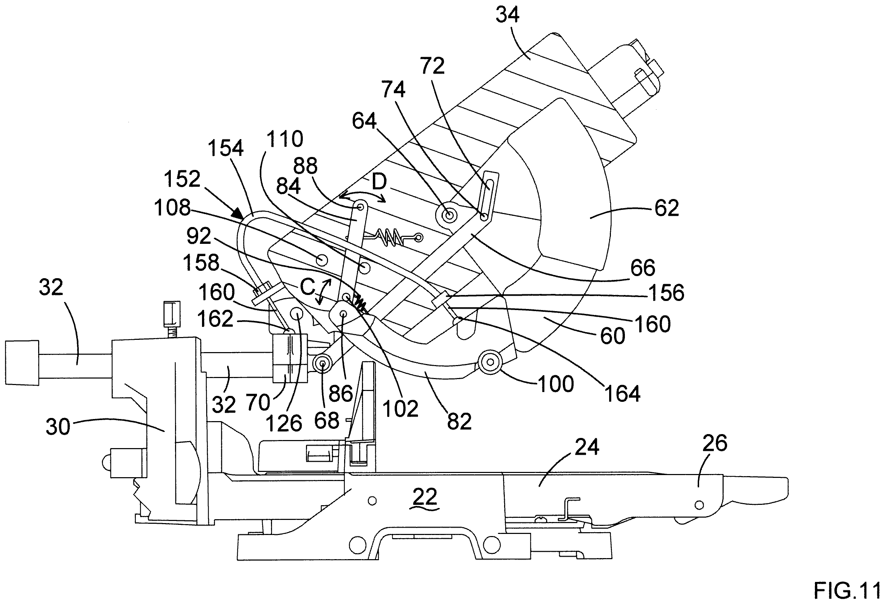

A third embodiment of the present invention will now be described with reference to Figure 11. Where the same features disclosed in the third embodiment were present in the first embodiment, the same reference figures have been used.

The design of the third embodiment is substantially the same as the first embodiment. However, in the third embodiment, the cam 94 and cam follower 97 on the fourth rearward guard 82 has been removed and replaced by a Bowden cable 152.

The Bowden cable 152 comprises a sleeve 154 and cable 160.The sleeve 154 has a first end 156 attached the motor unit 34 in close proximity to the fourth rearward pivotal guard 82 and a second end 158 attached the motor unit 34 in close proximity to the motor support 70. The cable 160 is connected at a first end 164 to the fourth rearward pivotal guard 82 and at the other second end 162 to the motor support 70. As the motor unit 34 pivots about the axis 126 towards the base assembly, the distance between the second end 158 of the sleeve 154 and the motor support 70 increases, causing the cable 160 to be pulled through the sleeve 154. This results in the length of cable 160 between the first end 156 of the sleeve 154 and the first end 164 of the cable 160 to be reduced, causing the rearward pivotal guard 82 to move away from the base assembly, either by pivoting about its pivot axis 86 or by pivotal movement of the lever 84 on which is it is mounted.

If the fourth rearward pivotal guard 82 encounters a work piece as the motor unit 34 pivots towards the base assembly, the fourth rearward pivotal guard 82 can freely move away from the base assembly, either by pivoting about its pivot axis 86 or by pivotal movement of the lever 84 on which is it is mounted, as the length of cable 160 between the first end 156 of the sleeve and the first end 164 of the cable can freely flex.

By using a Bowden cable for the rearward pivotal guard 82 and the bar 66 for the forward guards 60, 62 there is provided two separate guard actuating mechanisms for front and rear guards. The movement of the rearward pivotal guard 82 is therefore independent of movement of front guards 60, 62.

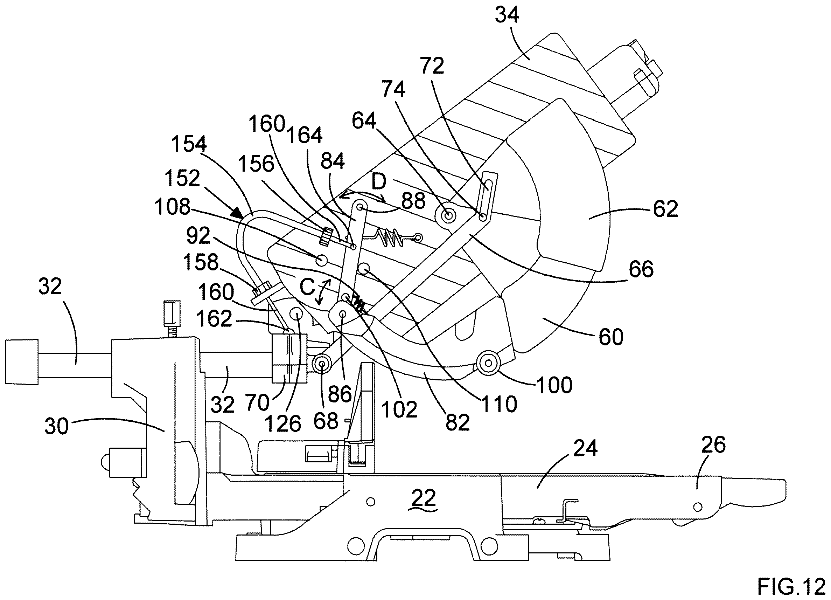

A fourth embodiment of the present invention will now be described with reference to Figure 12. Where the same features disclosed in the fourth embodiment were present in the third embodiment, the same reference figures have been used.

The design of the fourth embodiment is substantially the same as the third embodiment. However, in the fourth embodiment, the first end 164 of the cable 160 is connected to the lever 84 in stead of the fourth rearward guard 82.

The action of the Bowden cable 152 is the same as in the third embodiment. However, in the fourth embodiment, the resultant movement of cable 160 causes the lever 84 to pivot. This in turn moves the rearward pivotal guard in its entirety, as the pivot point 86 of the rearward pivotal guard 82 is moved.

## Claims

1. A chop saw comprising:
a base assembly (22);
a motor unit (34) pivotally mounted on the base assembly to allow the motor unit to pivot towards or away from the base assembly to perform chop cuts, the motor unit having an output drive spindle upon which a circular saw blade (36) can be rigidly mounted to be rotationally driven by the motor unit, the axis of pivot (68) of the motor unit on the base being substantially parallel to the axis of rotation (64) of the output drive spindle;
at least one rearward pivotal guard (82) pivotally mounted at a pivot point (86) on the motor unit which can pivot from a first enclosed position, where it surrounds at least a portion of the lower cutting edge of a saw blade when mounted on the spindle, to a second retracted position where the portion of the lower cutting edge of the saw blade is exposed;
a pivotal guard actuating mechanism (66 ,97) which moves the at least one rearward pivotal guard from its first enclosed position to its second retracted position when the motor unit is pivoted towards the base assembly;
**characterised in that** the pivot point of the rearward guard is capable of being moved relative to the motor unit, the pivotal guard actuating mechanism moving the at least one rearward pivotal guard from its first enclosed position to its second retracted position by pivoting the rearward pivotal guard about its pivot point and/or moving the pivot point.

2. A chop saw as claimed in claim 1 wherein the rearward pivotal guard (82) is capable of being moved from the first enclosed position and/or the second retracted position to a third exposed position where at least part of the upper rear quarter of the blade (36) is exposed.

3. A chop saw as claimed in claim 2 wherein when the rearward pivotal guard (82) is in the first enclosed position, the pivot point (86) is below the axis of rotation (64) of the spindle and when the rearward pivotal blade guard is in the third exposed position, the pivot point is above the axis of rotation of the drive spindle.

4. A chop saw as claimed in any one of the previous claims wherein the rearward pivotal guard (82) is pivotally mounted at the pivot point (86) to one end of a lever (84) which in turn is pivotally mounted at a pivot point (88) on the motor unit (34).

5. A chop saw as claimed in claim 4 wherein the guard actuation mechanism engages:
1) the rear pivotal guard (82) only;
2) the lever (84) only; or
3) both the rear pivotal guard and the lever either simultaneously or successively;
to move moves the at least one rearward pivotal guard from its first enclosed position to its second retracted position.

6. A chop saw as claimed in either of claims 4 or 5 wherein the position where the pivot point (88) of the lever connects to the motor unit is higher that than the axis of rotation (64) the drive spindle when the motor unit (34) is pivoted to its closest position to the base assembly (22).

7. A chop saw as claimed in any one of the previous claims wherein, when the rearward pivotal guard (82) is in either its first, second or third positions, the axis of pivot (86) of rear guard is located between the axis of rotation (64) of the blade and axis of pivot (68) of motor unit on the base assembly and preferably between the periphery of blade (36) and axis of pivot of motor unit on the base assembly, in a horizontal direction.

8. A chop saw as claimed in claim 7 wherein, when the rearward pivotal guard (82) moves away from its first enclosed position due to movement of its pivot point (86), the pivot point moves away, in a horizontal direction, from periphery of the blade (36) towards axis of pivot of motor unit on the base assembly.

9. A chop saw as claimed in any one of the previous claims wherein the rearward pivotal guard (82) comprises two side panels connected to each other via a central portion, the panels forming a channel in which the blade (36) locates when the rearward pivotal blade guard is in its first enclosed position, the central portion traversing the plane of the blade.

10. A chop saw as claimed in any one of the previous claims wherein there is further provided with at least one forward pivotal guard (60, 62) pivotally mounted on the motor unit (34) which can pivot from a first position, where it surrounds at least a portion of the lower edge of a saw blade (36) to a second retracted position where the portion of the lower edge of the saw blade is exposed **characterised in that** the pivotal guard actuating mechanism moves the at least one forward pivotal guard from its first position to its second retracted position when it moves the at least one rearward pivotal guard (82) from its first position to its second retracted position as the motor unit is pivoted towards the base assembly.

11. A chop saw as claimed in any one of claims 1 to 9 wherein there is further provided with at least one forward pivotal guard pivotally (60, 62) mounted on the motor unit (34) which can pivot from a first position, where it surrounds at least a portion of the lower edge of a saw blade (36) to a second retracted position where the portion of the lower edge of the saw blade is exposed **characterised in that** there is provided separate guard actuating mechanisms for front and rear guards.

12. A chop saw as claimed in any of the previous claims wherein the guard actuation mechanism (66, 97) comprises a mechanical linkage having two parts, the first part connected to the rearward pivotal guard (82), the second part connected to the base assembly (22), one part comprising a cam (99), the other a cam follower (97), and being arranged so that, as the motor unit (34) is pivoted towards the base assembly, the cam follower rides over the cam to move the at least one rearward pivotal guard from its first position to its second position.

13. A chop saw as claimed in claim 12 wherein the rearward pivotal guard (82) is capable of being moved from the first enclosed position and/or the second retracted position to a third exposed position where at least part of the upper rear quarter of the blade (36) is exposed, the cam (99) disengaging from the cam follower (97) when the rearward pivotal guard moves from the first enclosed position and/or the second retracted position to a third exposed position.

14. A chop saw as claimed in either of claims 12 or 13 wherein the shape of cam (99) controls rate of movement of the at least one rearward pivotal guard (82) versus pivotal movement of the motor unit (34).

15. A chop saw as claimed in any one of claims 1 to 11 wherein the guard actuation mechanism comprises a cable (160) having two ends, the first end (164) connected to the rearward pivotal guard (82), the second end (162) connected to the base assembly (22), and being arranged so that, as the motor unit (34) is pivoted towards the base assembly, the cable is pulled to move the at least one rearward pivotal guard.

## Patentansprüche

1. Kappsäge, aufweisend:
eine Basisanordnung (22);
eine Motoreinheit (34), die schwenkbar an der Basisanordnung angebracht ist, um zu erlauben, die Motoreinheit zu der Basisanordnung hin oder von ihr weg zu schwenken, um Kappschnitte durchzuführen, wobei die Motoreinheit eine Ausgangsantriebsspindel aufweist, auf der ein Kreissägeblatt (36) starr montiert werden kann, um durch die Motoreinheit drehabgetrieben zu werden, wobei die Schwenkachse (68) der Motoreinheit auf der Basis im Wesentlichen parallel zu der Drehachse (64) der Ausgangsantriebsspindel ist;
mindestens einen Rückwärts-Schwenkschutz (82), der schwenkbar an einem Schwenkpunkt (86) auf der Motoreinheit montiert ist, der von einer ersten umschließenden Position, in der er zumindest einen Abschnitt der unteren Schneidkante eines Sägeblatts umgibt, wenn es auf der Spindel montiert ist, in eine zweite zurückgezogene Position, in der der untere Abschnitt der Schneidkante des Sägeblatts freiliegt, geschwenkt werden kann;
einen Schwenkschutzbetätigungsmechanismus (66, 97), der den wenigstens einen Rückwärts-Schwenkschutz von seiner ersten geschlossenen Position zu seiner zweiten zurückgezogenen Position bewegt, wenn die Motoreinheit in Richtung der Basisanordnung geschwenkt wird;
**dadurch gekennzeichnet, dass** der Schwenkpunkt des Rückwärts-Schwenkschutzes dazu in der Lage ist, relativ zu der der Motoreinheit bewegt zu werden, wobei der Schwenkschutzbetätigungsmechanismus den mindestens einen Rückwärts-Schwenkschutz von seiner ersten umschließenden Position in seine zweite zurückgezogene Position bewegt, indem er den Rückwärts-Schwenkschutz um seinen Schwenkpunkt schwenkt und/oder den Schwenkpunkt bewegt.

2. Kappsäge nach Anspruch 1, wobei der hintere Schwenkschutz (82) dazu in der Lage ist, von der ersten umschließenden Position und/oder der zweiten zurückgezogenen Position zu einer dritten freiliegenden Position bewegt zu werden, in der mindestens ein Teil des oberen hinteren Viertels des Blatts (36) freiliegt.

3. Kappsäge nach Anspruch 2, wobei, wenn der Rückwärts-Schwenkschutz (82) in der ersten umschließenden Position ist, der Schwenkpunkt (86) unterhalb der Drehachse (64) der Spindel ist, und wenn der Rückwärts-Schwenkblattschutz in der dritten freiliegenden Position ist, der Schwenkpunkt oberhalb der Drehachse der Antriebsspindel ist.

4. Kappsäge nach einem der vorhergehenden Ansprüche, wobei der Rückwärts-Schwenkschutz (82) schwenkbar an dem Schwenkpunkt (86) an einem Ende eines Hebels (84) montiert ist, der seinerseits schwenkbar an einem Schwenkpunkt (88) auf der Motoreinheit (34) montiert ist.

5. Kappsäge nach Anspruch 4, wobei der Schutzbetätigungsmechanismus in Eingriff steht mit:
1) nur dem Rückwärts-Schwenkschutz (82);
2) nur dem Hebel (84); oder
3) sowohl dem Rückwärts-Schwenkschutz als auch dem Hebel, entweder gleichzeitig oder nacheinander;
um den mindestens einen Rückwärts-Schwenkschutz von seiner ersten umschließenden Position in seine zweite zurückgezogene Position zu bewegen.

6. Kappsäge nach einem der Ansprüche 4 oder 5, wobei die Position, in der der Schwenkpunkt (88) des Hebels mit der Motoreinheit verbunden ist, höher ist als die Drehachse (64) der Antriebsspindel, wenn die Motoreinheit (34) in ihre am nächsten an der Basisanordnung (22) liegende Position geschwenkt ist.

7. Kappsäge nach einem der vorhergehenden Ansprüche, wobei, wenn der Rückwärts-Schwenkschutz (82) entweder in seiner ersten, zweiten, oder dritten Position ist, die Schwenkachse (86) des Rückwärts-Schutzes, in einer horizontalen Richtung, zwischen der Drehachse (64) des Blatts und der Schwenkachse (68) der Motoreinheit auf der Basisanordnung, und bevorzugt zwischen dem Umfang des Blatts (36) und der Schwenkachse der Motoreinheit auf der Basisanordnung angeordnet ist.

8. Kappsäge nach Anspruch 7, wobei, wenn sich der Rückwärts-Schwenkschutz (82) von seiner ersten umschließenden Position wegbewegt, aufgrund einer Bewegung seines Schwenkpunkts (86), sich der Schwenkpunkt in einer horizontalen Richtung von dem Umfang des Blatts (36) wegbewegt, in Richtung zu der Drehachse der Motoreinheit auf der Basisanordnung.

9. Kappsäge nach einem der vorhergehenden Ansprüche, wobei der hintere Schwenkschutz (82) zwei Seitenplatten aufweist, die über einen mittleren Abschnitt miteinander verbunden sind, wobei die Platten einen Kanal bildet, in dem das Blatt (36) angeordnet ist, wenn der hintere Schwenkschutz in seiner umschließenden Position ist, wobei der mittlere Abschnitt die Ebene des Blattes durchquert.

10. Kappsäge nach einem der vorhergehenden Ansprüche, wobei diese ferner mit mindestens einem Vorwärts-Schwenkschutz (60, 62) ausgestattet ist, der schwenkbar an der Motoreinheit (34) montiert ist, der von einer ersten Position, in der er mindestens einen Abschnitt des unteren Kante eines Sägeblatts (36) umgibt, in eine zweite zurückgezogene Position, in der der Abschnitt der unteren Kante des Sägeblatts freiliegt, geschwenkt werden kann, **dadurch gekennzeichnet, dass** der Schwenkschutzbetätigungsmechanismus den zumindest einen Vorwärts-Schwenkschutz von seiner ersten Position in seine zweite zurückgezogene Position bewegt, wenn er den mindestens einen Rückwärts-Schwenkschutz (82) von seiner ersten Position in seine zweite zurückgezogene Position bewegt, wenn die Motoreinheit in Richtung der Basisanordnung geschwenkt wird.

11. Kappsäge in einem der Ansprüche 1 bis 9, wobei diese ferner mit mindestens einem Vorwärts-Schwenkschutz ausgestattet ist, der schwenkbar (60, 62) an der Motoreinheit (34) montiert ist, der geschwenkt werden kann von einer ersten Position, in der er mindestens einen Abschnitt der unteren Kante eines Sägeblatts (36) umgibt, in eine zweite zurückgezogene Position, in der der Abschnitt der unteren Kante des Sägeblatts freiliegt, **dadurch gekennzeichnet, dass** ein separater Schwenkschutzbetätigungsmechanismus für den Vorwärts- und für den Rückwärts-Schwenkschutz vorgesehen ist.

12. Kappsäge nach einem der vorherigen Ansprüche, wobei der Schutzbetätigungsmechanismus (66, 97) eine mechanische Verbindung aufweist, die zwei Teile aufweist, wobei der erste Teil mit dem Rückwärts-Schwenkschutz (82) verbunden ist, der zweite Teil mit der Basisanordnung (22) verbunden ist, ein Teil einen Nocken (99) aufweist, der andere einen Nockenfolger (97), und so angeordnet ist, dass, wenn die Motoreinheit (34) in Richtung der Basisanordnung geschwenkt wird, der Nockenfolger über den Nocken fährt, um den mindestens einen Rückwärts-Schwenkschutz von seiner ersten Position in seine zweite Position zu bewegen.

13. Kappsäge nach Anspruch 12, wobei der Rückwärts-Schwenkschutz (82) dazu in der Lage ist, von der ersten umschließenden Position und/oder der zweiten zurückgezogenen Position in eine dritte freigelegte Position bewegt zu werden, in der mindestens ein Teil des oberen hinteren Viertels des Blatts (36) freiliegt, wobei die Nocke (99) außer Eingriff von dem Nockenfolger (97) ist, wenn sich der Rückwärts-Schwenkschutz von der ersten umschließenden Position und/oder der zweiten zurückgezogenen Position in eine dritte freiliegende Position bewegt.

14. Kappsäge in einem der Ansprüche 12 oder 13, wobei die Form des Nockens (99) die Bewegungsrate des mindestens einen Rückwärts-Schwenkschutzes (82) gegenüber der Schwenkbewegung der Motoreinheit (34) steuert.

15. Kappsäge nach einem der Ansprüche 1 bis 11, wobei der Schutzbetätigungsmechanismus ein Kabel (160) aufweist, das zwei Enden hat, wobei das erste Ende (164) mit dem Rückwärts-Schwenkschutz (82) verbunden ist, das zweite Ende (162) mit der Basisanordnung (22) verbunden ist, und so angeordnet ist, dass wenn die Motoreinheit (34) in Richtung der Basisanordnung geschwenkt wird, das Kabel gezogen wird, um den zumindest einen Rückwärts-Schwenkschutz zu bewegen.

## Revendications

1. Tronçonneuse comprenant :
un ensemble de base (22) ;
une unité motrice (34) montée à pivotement sur l'ensemble de base pour permettre à l'unité motrice de pivoter vers l'ensemble de base ou en sens inverse pour effectuer des découpes, l'unité motrice ayant une broche d'entraînement de sortie sur laquelle peut être montée de manière rigide une lame de scie circulaire (36) pour l'entraîner en rotation par l'unité motrice, l'axe pivot (68) de l'unité motrice sur la base étant sensiblement parallèle à l'axe de rotation (64) de la broche d'entraînement de sortie ;
au moins une garde pivotante arrière (82) montée à pivotement en un point pivot (86) sur l'unité motrice, qui peut pivoter d'une première position enfermée, où elle entoure au moins une partie du bord de coupe inférieur d'une lame de scie lorsqu'elle est montée sur la broche, à une deuxième position rétractée où la partie du bord de coupe inférieur de la lame de scie est exposée ;
un mécanisme d'actionnement de garde pivotante (66, 97) qui déplace la au moins une garde pivotante arrière de sa position enfermée à sa deuxième position rétractée lorsque l'unité motrice est soumise à un pivotement vers l'ensemble de base ;
**caractérisée en ce que** le point pivot de la garde arrière est capable de se déplacer par rapport à l'unité motrice, le mécanisme d'actionnement de la garde pivotante déplaçant la au moins une garde pivotante arrière de sa première position enfermée à sa deuxième position rétractée en faisant pivoter la garde pivotante arrière autour de son point pivot et/ou en déplaçant le point pivot.

2. Tronçonneuse selon la revendication 1, dans laquelle la garde pivotante arrière (82) est capable de se déplacer de la première position enfermée et/ou de la deuxième position rétractée à une troisième position exposée où au moins une partie du quartier supérieur arrière de la lame (36) est exposée.

3. Tronçonneuse selon la revendication 2, dans laquelle, lorsque la garde pivotante arrière (82) est dans la première position enfermée, le point pivot (86) se situe en dessous de l'axe de rotation (64) de la broche et, lorsque la garde lame pivotante arrière se trouve dans la troisième position exposée, le point pivot se situe au-dessus de l'axe de rotation de la broche d'entraînement.

4. Tronçonneuse selon l'une quelconque des revendications précédentes, dans laquelle la garde pivotante arrière (82) est montée à pivotement au point pivot (86) à une extrémité d'un levier (84) qui est monté à son tour à pivotement en un point pivot (88) sur l'unité motrice (34).

5. Tronçonneuse selon la revendication 4, dans laquelle le mécanisme d'actionnement de garde s'engage :
1) sur la garde pivotante arrière (82) seulement ;
2) sur le levier (84) seulement ; ou
3) à la fois sur la garde pivotante arrière et le levier simultanément ou successivement ;
pour déplacer la au moins une garde pivotante arrière de sa première position enfermée à sa deuxième position rétractée.

6. Tronçonneuse selon l'une quelconque des revendications 4 ou 5, dans laquelle la position où le point pivot (88) du levier se raccorde à l'unité motrice est supérieure à l'axe de rotation (64) de la broche d'entraînement lorsque l'unité motrice (34) est soumise à un pivotement vers sa position la plus proche de l'ensemble de base (22).

7. Tronçonneuse selon l'une quelconque des revendications précédentes, dans laquelle, lorsque la garde pivotante arrière (82) se trouve dans sa première, sa deuxième ou sa troisième position, l'axe de pivotement (86) de la garde arrière est situé entre l'axe de rotation (64) de la lame et l'axe de pivotement (68) de l'unité motrice sur l'ensemble de base et, de préférence, entre la périphérie de la lame (36) et l'axe de pivot de pivotement de l'unité motrice sur l'ensemble de base, dans une direction horizontale.

8. Tronçonneuse selon la revendication 7, dans laquelle, lorsque la garde pivotante arrière (82) s'éloigne de sa première position enfermée en raison du mouvement de son point pivot (86), le point pivot s'écarte dans la direction horizontale de la périphérie de la lame (36) vers l'axe de pivotement de l'unité motrice sur l'ensemble de base.

9. Tronçonneuse selon l'une quelconque des revendications précédentes, dans laquelle la garde pivotante arrière (82) comprend deux panneaux latéraux raccordés l'un à l'autre via une partie centrale, les panneaux formant un canal dans lequel la lame (36) est située lorsque la garde-lame pivotante arrière se trouve dans sa première position enfermée, la partie centrale traversant le plan de la lame.

10. Tronçonneuse selon l'une quelconque des revendications précédentes, dans laquelle il est encore prévu au moins une garde pivotante avant (60, 62) montée à pivotement sur l'unité motrice (34), qui peut pivoter d'une première position, où elle entoure au moins une partie du bord inférieur d'une lame de scie (36), à une deuxième position rétractée, où la partie du bord inférieur de la lame de scie est exposée, **caractérisée en ce que** le mécanisme d'actionnement de garde pivotante déplace la au moins une garde pivotante avant de sa première position à sa deuxième position rétractée lorsqu'il déplace la au moins une garde pivotante arrière (82) de sa première position à sa deuxième position rétractée lorsque l'unité motrice est soumise à un pivotement vers l'ensemble de base.

11. Tronçonneuse selon l'une quelconque des revendications 1 à 9, dans laquelle il est en outre prévu au moins une garde pivotante avant montée à pivotement (60, 62) sur l'unité motrice (34), qui peut pivoter d'une première position, où elle entoure au moins une partie du bord inférieur d'une lame de scie (36), à une deuxième position rétractée, où la partie du bord inférieur de la lame de scie est exposée, **caractérisée en ce qu'**il est prévu des mécanismes d'actionnement de gardes séparés pour les gardes avant et arrière.

12. Tronçonneuse selon l'une quelconque des revendications précédentes, dans laquelle le mécanisme d'actionnement de garde (66, 97) comprend une liaison mécanique ayant deux parties, la première partie étant raccordée à la garde pivotante arrière (82), la deuxième partie étant raccordée à l'ensemble de base (22), une partie comprenant une came (99), l'autre un suiveur de came (97), et étant agencées de sorte que, lorsque l'unité motrice (34) est soumise à un pivotement vers l'ensemble de base, le suiveur de came se déplace sur la came pour déplacer la au moins une garde pivotante arrière de sa première position à sa deuxième position.

13. Tronçonneuse selon la revendication 12, dans laquelle la garde pivotante arrière (82) est capable de se déplacer de la première position enfermée et/ou de la deuxième position rétractée à une troisième position exposée où au moins une partie du quartier arrière supérieur de la lame (36) est exposée, la came (99) se dégageant du suiveur de came (97) lorsque la garde pivotante arrière se déplace de la première position enfermée et/ou de la deuxième position rétractée à une troisième position exposée.

14. Tronçonneuse selon l'une quelconque des revendications 12 ou 13, dans laquelle la forme de la came (99) commande la vitesse de déplacement de la au moins une garde pivotante arrière (82) par rapport au mouvement pivotant de l'unité motrice (34).

15. Tronçonneuse selon l'une quelconque des revendications 1 à 11, dans laquelle le mécanisme d'actionnement de garde comprend un câble (160) ayant deux extrémités, la première extrémité (164) étant raccordée à la garde pivotante arrière (82), la seconde extrémité (162) étant raccordée à l'ensemble de base (22), et étant aménagé de sorte que, lorsque l'unité motrice (34) est soumise à un pivotement vers l'ensemble de base, le câble soit tiré pour déplacer la au moins une garde pivotante arrière.
